# EUROPÄISCHE PATENTSCHRIFT

(11) **EP 2 614 918 B1**
(45) Veröffentlichungstag und Bekanntmachung des Hinweises auf die Patenterteilung: **28.01.2015**
(21) Anmeldenummer: 12199411.5
(22) Anmeldetag: 27.12.2012
(51) Int. Cl.: B23K 26/38, B23K 26/40, F16H 63/30, F16H 63/38, B21D 53/00

(54) **Verfahren zur Herstellung eines Schaltrohres durch Laserschneiden von Öffnungen**
Method of producing a reed switch with laser cutting of openings
Procédé de fabrication d'un tube commutateur avec perçage d'ouvertures par laser

(30) Priorität: 12.01.2012 DE 102012100236
(43) Veröffentlichungstag der Anmeldung: 17.07.2013
(73) Patentinhaber: Koki Technik Transmission Systems GmbH, 09399 Niederwürschnitz (DE)
(72) Erfinder: Preiser, Markus, 78467 Konstanz (DE); Schulze, Bernd Dr., 09366 Niederdorf (DE)
(74) Vertreter: Weiss, Peter

(56) Entgegenhaltungen:
- DE-A1- 10 007 190
- DE-A1-102004 020 136
- DE-A1-102008 013 227
- DE-A1-102008 052 139
- DE-B3- 10 354 167

## Beschreibung

Die Erfindung betrifft ein Verfahren zur Herstellung eines Schaltrohres für Kraftfahrzeuggetriebe nach dem Oberbegriff des Anspruchs 1 (siehe, z.B., DE 103 54 167 B3).

### Stand der Technik

Aus dem Stand der Tecknik sind verschiedene Arten von Schaltrohren für Kraftfahrzeuggetriebe und Verfahren zur Herstellung solcher Schaltrohre bekannt und gebräuchlich. In der Regel werden hierzu zwei längliche Halbschalen durch Schweissen miteinander verbunden. Durch die zwei länglichen Halbschalen entsteht dabei das Grundgerüst des Schaltrohres. An dieses Schaltrohr werden dann wiederum andere Teile wie Lagerbuchsen oder Schaltkulissen oder dergleichen angefügt bzw. eingearbeitet.

In Schaltgetrieben von Fahrzeugen wird die Schaltbewegung des Schalthebel in einem Getriebeschaltdom auf die Schaltwelle übertragen, die dann die Schaltgabel betätigt. Auf der Schaltwelle sitzt in dem Schaltdom eine Rastierungshülse bzw. ein Schaltrohr, das die nicht gewählten Schaltgabeln in Neutralstellung fixiert. Dazu gibt es bereits eine ganze Reihe von Anmeldungen.

Beispielshaft sei hier die DE 19924562 erwähnt. Dort ist eine Rastierungshülse für eine Schaltwelle beschrieben, welche mehrteilig aufgebaut ist. Die Rastierungshülse umfasst eine Hülse, eine Scheibe sowie ein Topfteil, welches wiederum aus zwei Bauteilen besteht. Das Topfteil ist über eine Trennebene zusammengefügt und mit zumindest einem Übertragungselement wie beispielsweise einem Schaltfinger oder Rastkontur verbunden.

Ausserdem wird auf die DE 10 2006 007 248 A1 hingewiesen. Dort ist eine Rastierungshülse, insbesondere zur Begrenzung der Schaltwege eines Schalthebels einer Schaltwelle eines Getriebes beschrieben, an die eine Rampenkontur zur Verhinderung des Wählens eines Rückwärtsgangs angeformt ist.

Zuletzt wird auf die DE 10 2010 018 655 A1 hingewiesen, welche eine Rastierungshülse für ein Schaltgetriebe offenbart, wobei die Rastierungshülse halbschalenförmig aufgebaut und eine Schalt-Höhe-Kontur umfasst, welche die Besonderheit aufweist, dass die Rastierungshülse zusätzlich zu der Schalt-Wähl-Kontur ein Sperrfenster und/oder Kulisse umfasst. Die Rastierungshülse selbst ist über Befestigungsnasen mit einem Befestiungsbereich verbunden oder verschweisst. Dabei bildet der Befestigungsbereich die eine Halbschale, welche aus dem Stand der Technik bekannt und die Rastierungshülse die andere Halbschale, wie sie im Stand der Technik bereits vorab beschrieben wurde.

### Aufgabe der Erfindung

Aufgabe der Erfindung ist es ein Verfahren zur Herstellung eines Schaltrohres für ein Kraftfahrzeuggetriebe zur Verfügung zu stellen, welches möglichst die Anzahl der zu berücksichtigenden Toleranzen der Einzelteile verringert und dabei die kostengünstige flexible und schnellere Herstellung eines entsprechenden Schaltrohrs ermöglicht.

### Lösung der Aufgabe

Die erfindungsgemässe Aufgabe wird durch die Merkmale des Verfahrensanspruchs 1 gelöst.

Das erfindungsgemässe Verfahren zur Herstellung eines Schaltrohres für ein Kraftfahrzeuggetriebe besteht aus einem Rohrstück. Dieses Rohrstück weist eine dem Kraftfahrzeuggetriebe angepasste Materialstärke- bzw. - auswahl auf.

Ausserdem richten sich auch die Ausmasse in Länge, Breite und Durchmesser sowie Umfang nach den Anforderungen des jeweiligen Kraftfahrzeuggetriebes und liegen im Ermessen des jeweiligen Fachmanns. Vorteilhaft an dem erfindungsgemässen Verfahren ist der Umstand, dass das Rohrstück als Laserschneidteil hergestellt werden kann und alle Durchbrüche, Konturen, Fenster sowie das Ablängen in einem einzigen Arbeitsgang durch Laserschneiden eingebracht werden kann.

Ausserdem ist vorteilhaft in dem erfindungsgemässen Verfahren, dass eine gute Masshaltigkeit erreicht wird, da deutlich weniger Einzelteile benötigt werden, bei denen sich durch den Schweissvorgang die Einzeltoleranzen aus dem Schweissen auch nicht aufaddieren, wie dies aus dem Stand der Technik beispielsweise der Fall ist. Das erfindungsemässe Verfahren weist ausserdem den Vorteil auf, dass sowohl hohe Stückzahlen, und aufgrund deutlich geringer Einmalkosten für Werkzeuge, auch kleinere Stückzahlen kostengünstig hergestellt werden können. Ausserdem fallen die Kosten für Werkzeuge deutlich geringer aus, da die eingebrachten Konturen und Fenster nicht werkzeuggebunden sind und bei entsprechenden Änderungen deutlich flexibler und kostengünstiger reagiert werden kann.

Das Rohrstück wird in einem erfindungsgemässen Verfahren zur Herstellung eines Schaltrohres durch Laserschneiden bearbeitet. Hierbei wird bevorzugt zumindest eine Öffnung in das Rohrstück eingebracht. Form und Ausmass der Öffnung richtet sich nach der mit der Öffnung verbundenen Aufgabe. Dieses einstückige Rohrstück mit den entsprechenden Öffnungen wird in einem weiteren alternativen Verfahrensschritt auf einen Dorn aufgeschoben. Dieser Dorn dient unter anderem der Fixierung des Rohrabschnitts. Hierbei wird der Rohrabschnitt an einer vordefinierten Position am Dorn festgelegt. Die vordefinierte Position bestimmt nicht nur, inwieweit der Rohrabschnitt auf den Dorn aufgeschoben wird, sondern auch in welcher Drehausrichtung die vorher eingebrachten Öffnungen relativ zur Werkzeugschließrichtung bzw zur Werkzeugbewegungsrichtung liegen müssen.

Anschliessend wird der Rohrabschnitt erfindungsgemäß durch zwei gegenüberliegende Pressbacken bearbeitet. Dabei werden die Pressbacken auf je eine Öffnung auf dem Umfang des Rohrabschnitts zueinander hingedrückt. Dadurch, dass die zwei gegenüberliegenden Pressbacken zueinander hingedrückt werden, wird die auf dem Umfang des Rohrabschnitts in die jeweiliege Öffnung nach Innen verformt. Durch diese Verformung und die jeweilige Form der Pressbacken, gerade an ihrem Stempel bestimmen ob und inwieweit aus der Öffnung eine Schaltschräge entsteht.

In einem anderem Verfahrensschritt werden je an einem Ende des Rohrstücks je eine Lagerbuchse eingebracht. Die Lagerbuchsen sind hierbei, wenn möglich, identisch. Dies ist insoweit vorteilhaft, als dass bei den im Stand der Technik bekannten zusammengesetzten Halbschalen keine identischen Lagerbuschen zum Einsatz kommen. Vielmehr muss berücksichtigt werden, dass an jedem Ende des dann enstandenen Schaltrohrs eine unterschiedliche Lagerbuchse erforderlich ist. Dies ist bei einem einstückigen Rohrabschnitt nicht notwendig. Ausserdem ist vorteilhaft an dem hier beschriebenen Verfahren, dass die Schweissnähte zwischen den zwei Halbschalen nicht mehr notwendig sind. Dadurch entsteht zum Einen ein grösserer Gestaltungsfreiraum für die Anbringung der einzelnenen Öffnung auf der Oberfläche des Schaltrohrs und zum Anderen ist eine Toleranzberechnung, welche durch das Schweissen der beiden Halbschalen notwendig war, nun entbehrlich. Vor allem aber hat sich als vorteilhaft an diesem Verfahren herausgestellt, dass das kostenintensive Schweißen entfällt.

In einem weiteren Verfahrensschritt wird eine Rastierung durch Laserschweissen an den Rohrabschnitt eingefügt. Dieser Rastierung dient der Arretierung verschiedener Schaltposition wie "neutral" oder "eingelegt der Gang". In einem weiteren erfindungsgemässen Verfahrensschritt wird dann zumindest ein Schaltfinger durch Laserschweissen an den Rohrabschnitt gefügt. Dies gewährleistet vorteilhaft die bessere Funktionsfähigkeit des Schaltrohrs.

Zuletzt ist bei einer einstückigen Ausbildung des Schaltrohrs der Einsatz zweier identischer Lagerbuchsen möglich. Je eine der Lagerbuchsen wird dann an je einem im wesentlichen endseitigen Bereich des Schaltrohrs angebracht. Vorteilhaft hierbei ist der Umstand, dass es keiner aufwändigen Anpassung einzelner Lagerbuchen auf verschiedene Schaltrohre mehr bedarf.

Zuletzt wird der Vollständigkeit halber darauf hingewiesen, dass solche Schaltrohre in Kraftfahrzeuggetrieben für Personenkraftfahrzeuge oder Lastkraftwagenfahrzeuge verwendet wird.

### Figurenbeschreibung

Nachfolgend wir die Erfindung anhand der beiliegenden Zeichnungen näher erläutert, wobei die Zeichnungen zeigen:
- Figur 1: eine Rastierhülste nach dem Stand der Technik;
- Figur 2: eine schematische Ansicht von schräg oben auf ein erfindungsgemässes Schaltrohr;
- Figur 3: eine Ansicht von schräg oben, wie ein erfindunsgemässes Schaltrohr auf einen Dorn aufgesetzt ist;
- Figuren 4-6: wie ein erfindungsgemässes Schaltrohr weiter bearbeitet wird;
- Figur 7: eine geschnittene Seitenansicht des Bearbeitungsvorgangs aus den Figuren 4-6.

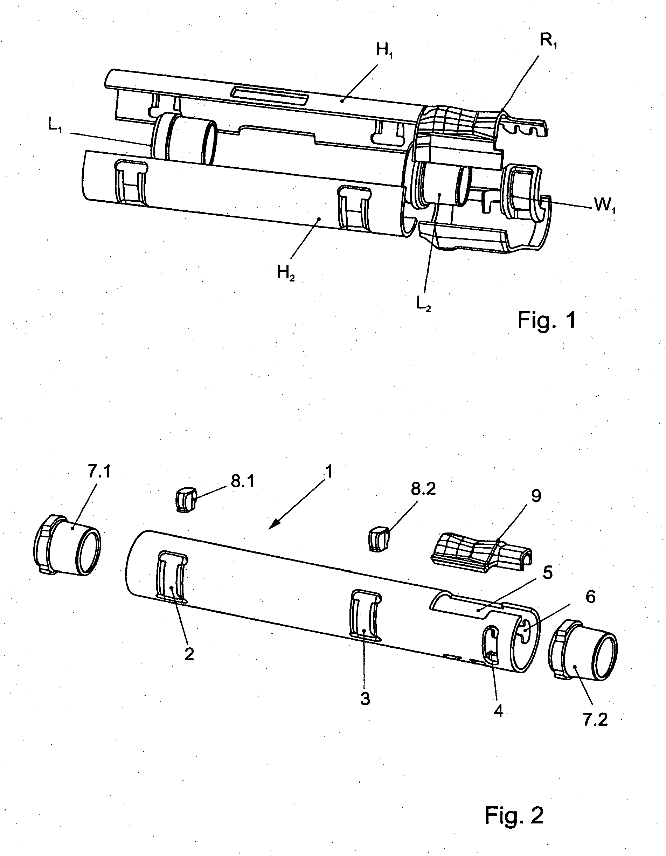

Aus der Figur 1 ist gut zu erkennen, wie zwei Halbschalen H1 und H2 zueinander gefügt werden, um eine Rastierungshülse nach dem Stand der Technik zu erhalten. Ausserdem ist in der Figur 1 gezeigt, wie die Rastierung R1 an die Halbschale H2 angepasst werden muss, und welche Genauigkeit hierbei notwendig ist. Ausserdem muss auch aufwendig ein Wähleingriff W1 an die beiden zusammengefügten Halbschalen H1 und H2 angepasst werden. Zuletzt bedarf es auch zweier unterschiedlicher Lagerbuchen L1 und L2, da die beiden Enden der Rastierungshülse nach dem Stand der Technik unterschiedlich ausfallen und dadurch ein Einsatz identischer Lagerbuchsen nicht möglich ist.

Figur 2 zeigt ein Schaltrohr 1, welches verschiedene Öffnungen 2, 3, 4, 5, 6 aufweist. Ausserdem ist in der Figur 2 zu erkennen, wie ein Schaltrohr 1 jeweils im wesentlichen endseitig eine Lagerbuchse 7.1 und 7.2 umfasst. Im wesentlichen endseitig bedeutet hierbei, dass bei einer gedachten Dreiteilung des Schaltrohrs 1 die Lagerbuchsen 7.1 und 7.2 in den Dritteln weg vom zentralen Drittel des Schaltrohrs liegen. In anderen Ausführungsbeispielen können einzelne oder beide Lagerbuchsen aber auch im zentralen Drittel des Schaltrohrs 1 liegen. Die Auswahl der Platzierung obliegt dem Fachmann und richtet sich nach dem Kraftfahrzeuggetrieb, in dem das Schaltrohr zum Einsatz kommt. Daneben ist auch angedeutet, wie ein Schaltfinger 8.1 bzw. 8.2 in einem weiteren Verfahrensschritt durch Laserschweissen auf den Umfang des Schaltrohrs 1 durch Laserschweisen aufgebracht wird. Daneben ist auch eine Rastierung 9 gezeigt, welche in die Öffnung 5 eingesetzt und durch Laserschweissen mit dem Schaltrohr 1 verbunden wird.

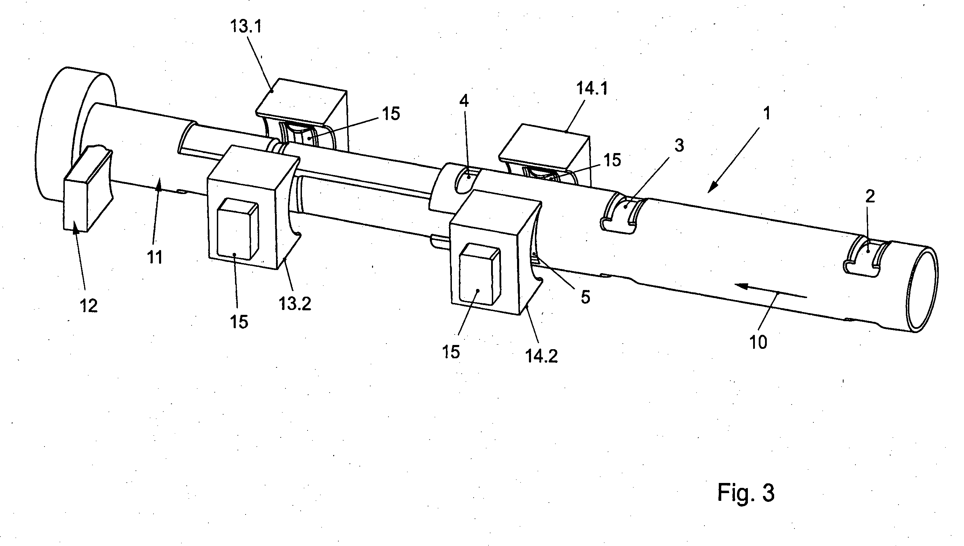

In Figur 3 ist gezeigt, wie das Schaltrohr 1 erfindungsgemäß in Richtung des Pfeils 10 auf einen Dorn 11 aufgeschoben wird. Hierbei wird darauf verzichtet, die einzelnen Öffnungen nochmals anzusprechen. Die Offenbarungen für die Bezugszeichen aus der Figur 2 gelten auch für die Figur 3. Der Dorn 11 weist eine Oberflächenstruktur auf, welche an das Schaltrohr 1 angepasst ist. Ausserdem befindet sich mit dem Dorn 11 eine Indexierung 12 in Wirkverbindung. Dies bedeutet, dass die Indexierung 12 das Schaltrohr 1 an einer vordefinierten Position, in diesem Ausführungsbeispiel in einem Teilbereich der Öffnung 5 in einer bestimmten Position an dem Dorn 11 festlegt. Ausserdem wirkt der Dorn 11 mit jeweils zwei gegenüberliegenden Pressbacken 13.1 und 13.2 bzw. 14.1 und 14.2 zusammen. Diese Pressbacken 13.1, 13.2, 14.1, 14.2 dienen der weiteren Bearbeitung des Schaltrohrs 1, in dem sie jeweils zueinander hindrücken, wenn sie gegenüberliegend angeordnet sind. Dies bedeutet im Einzelnen, dass die Pressbacken 13.1, 13.2 zueinander hindrück und die Pressbacken 14.1 und 14.2 jeweils zueinander hindrücken. Ausserdem ist in der Figur 3 gut zu erkennen, dass die Pressbacken jeweils einen Stempel 15 aufweisen, welcher wiederum die Bearbeitung der Öffnungen 2 und 3 übernehmen soll.

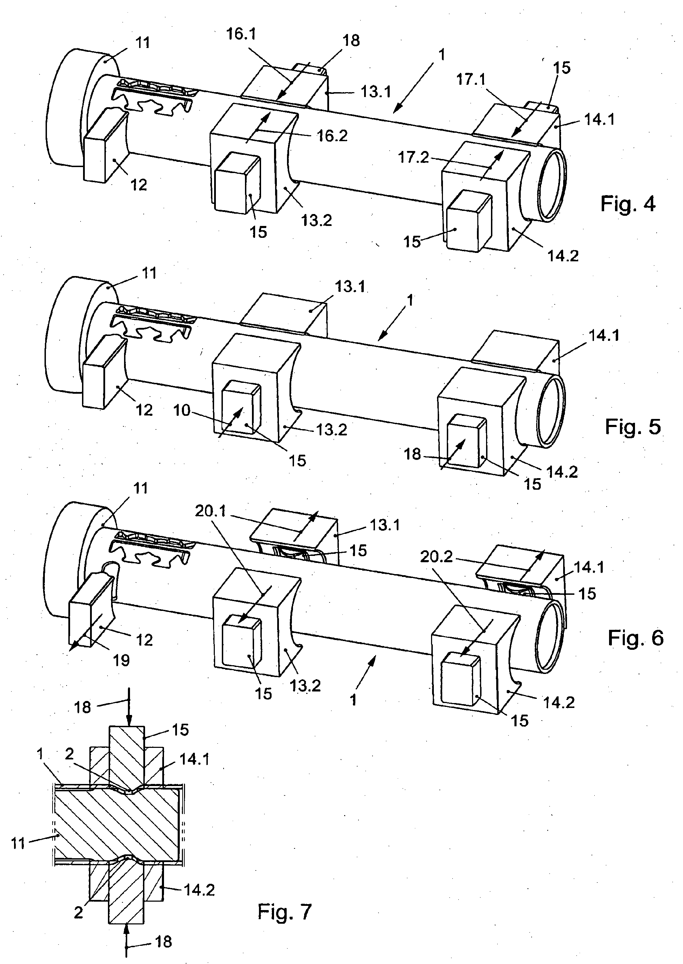

Hierzu wird auf die Figuren 4-6 verwiesen. Nachdem die Indexierung 12 das Schaltrohr 1 an dem Dorn 11 festgelegt hat, werden die Pressbacken 13.1 und 13.2, wie durch Pfeile 16.1 und 16.2 angedeutet zueinander hinbewegt. In gleicher Weise und bevorzugt zeitgleich werden auch die Pressbacken 14.1 und 14.2, wie durch die Pfeile 17.1 und 17.2 angedeutet zueinander hinbewegt. Die Stempel 15 sind in diesem Stadium noch nicht zu dem Schaltrohr 1 hinbewegt. Dies geschieht in einem zweiten Schritt, wie er in Figur 5 gezeigt ist. Dort werden die Stempel 15, wie angedeutet durch die Pfeile 18 zu dem Schaltrohr 1 hinbewegt, wobei die Stempel 15 hierbei in die Öffnungen 2, 3 des Schaltrohrs 1 eine vorgegebene Form einpressen, wie sie in Figur 7 gezeigt ist. Dort ist eine geschnittene Seitenansicht des Dorns 11 zu sehen, wobei das Schaltrohr 1 auf den Dorn 11 aufgeschoben ist und die Pressbacken 14.1 und 14.2 bereits das Schaltrohr festgelegt haben und der Stempel 15, wie der Pfeil 18 andeutet, zu den Öffnungen 2 des Schaltrohrs 1 hingedrückt wird und die Öffnungen 2 hierbei die vorgegebene Form des Dorns 11 ausfüllen und entsprechend eingestülpt werden.

Zuletzt wird auf die Figur 6 hingewiesen. Hier ist lediglich nochmals beschrieben, wie sich die Indexierung 12, wie durch ein Pfeil 19 angedeutet, zunächst von dem Schaltrohr 1 löst. Anschliessend werden die Presspacken 13.1, 13.2, 14.1, 14.2 mit den jeweiligen Stempeln 15 von dem Schaltrohr 1 gelöst, wie dies die Pfeile 20.1 bzw. 20.2 andeuten. In einem weiteren Schritt wird dann das Schaltrohr 1 mit bearbeiteten Öffnungen 2 und 3 gedreht und dann von dem Dorn 11 abgezogen. Das Drehen ist erforderlich, da sich das Schaltrohr 1 durch die eingeprägten Öffnungen 2 und 3 ansonsten nicht mehr vom Dorn 11 abziehen ließe.

**Bezugszeichenliste**

| | | | | | |
|---|---|---|---|---|---|
| 1 | Schaltrohr | 34 | | 67 | |
| 2 | Öffnungen | 35 | | 68 | |
| 3 | Öffnungen | 36 | | 69 | |
| 4 | Öffnungen | 37 | | 70 | |
| 5 | Öffnungen | 38 | | 71 | |
| 6 | Öffnunqen | 39 | | 72 | |
| 7.1 | Lagerbuchse | 40 | | 73 | |
| 7.2 | Lagerbuchse | | | | |
| 8.1 | Schaltfinger | 41 | | 74 | |
| 8.2 | Schaltfinger | | | | |
| 9 | Rastierung | 42 | | 75 | |
| 10 | Pfeil | 43 | | 76 | |
| 11 | Dorn | 44 | | 77 | |
| 12 | Indexierung | 45 | | 78 | |
| 13.1 | Pressbacken | 46 | | 79 | |
| 13.2 | Pressbacken | | | | |
| 14.1 | Pressbacken | 47 | | | |
| 14.2 | Pressbacken | | | | |
| 15 | Stempel | 48 | | | |
| 16.1 | Pfeil | 49 | | | |
| 16.2 | Pfeil | | | | |
| 17.1 | Pfeile | 50 | | | |
| 17.2 | Pfeil | | | | |
| 18 | Pfeil | 51 | | | |
| 19 | Pfeil | 52 | | H1 | Halbschalen |
| 20.1 | Pfeil | 53 | | H2 | Halbschalen |
| 20.2 | Pfeil | | | | |
| 21 | | 54 | | R1 | Rastierunq |
| 22 | | 55 | | W1 | Wähleinqriff |
| 23 | | 56 | | L1 | Lagerbuchse |
| 24 | | 57 | | L2 | Lagerbuchse |
| 25 | | 58 | | | |
| 26 | | 59 | | | |
| 27 | | 60 | | | |
| 28 | | 61 | | | |
| 29 | | 62 | | | |
| 30 | | 63 | | | |

## Patentansprüche

1. Verfahren zur Herstellung eines Schaltrohres für ein Kraftfahrzeuggetriebe, wobei
- ein einstückiges Rohrstück (1) durch Laserschneiden mit zumindest einer Öffnung (2 bis 6) versehen wird,
- in das Rohrstück (1) zumindest eine Öffnung (2 bis 6) lasereingeschnitten wird, wobei die Öffnung (2 bis 6) eine Kulissenkontur und/oder eine Sensorkontur und/oder ein Fenster für einen Schaltgabeldurchlass und/oder einen Wählhebeleingriff und/oder eine Aufnahme für eine Rastierung (9) ist, **dadurch gekennzeichnet, dass** - das Rohrstück (1) auf einen Dorn (11) aufgeschoben wird,
- das Rohrstück (1) an einer vordefinierten Position am Dorn (11) festgelegt wird,
- das Rohrstück (1) durch zwei gegenüberliegende Pressbacken (13.1, 13.2, 14.1, 14.2) bearbeitet wird, indem die Pressbacken (13.1, 13.2, 14.1, 14.2) auf je eine der Öffnungen (2 bis 6) auf dem Umfang des Rohrabschnitts derart zueinander hin drücken, alsdass aus der Öffnung (2 bis 6) eine Schaltschräge entsteht,
- zwei identische Lagerbuchsen (7.1, 7.2) jeweils endseitig an dem Rohrstück (1) angebracht werden.

2. Verfahren nach Anspruch 1, **dadurch gekennzeichnet, dass** je an einem im wesentlichen endseitigen Bereich des Rohrstücks (1) je eine Lagerbuchse (7.1, 7.2) eingebracht wird.

3. Verfahren nach einem der Ansprüche 1 oder 2, **dadurch gekennzeichnet, dass** eine Rastierung (9) durch Laserschweißen an das Rohrstück (1) gefügt wird.

4. Verfahren nach einem der vorigen Ansprüche, **dadurch gekennzeichnet, dass** zumindest ein Schaltfinger (8.1, 8.2) durch Laserschweissen an das Rohrstück (1) gefügt wird.

## Claims

1. Method for producing a shift tube for a motor-vehicle gearbox, wherein
- a one-piece tube piece (1) is provided with at least one opening (2 to 6) by laser cutting,
- at least one opening (2 to 6) is laser-cut into the tube piece (1), the opening (2 to 6) being a gate contour and/or a sensor contour and/or a window for a shift-fork passage and/or a selector-lever engagement and/or a receptacle for a locking device (9),
**characterised in that**
- the tube piece (1) is pushed onto a mandrel (11),
- the tube piece (1) is fixed at a predefined position on the mandrel (11),
- the tube piece (1) is worked on by two opposite pressing jaws (13.1, 13.2, 14.1, 14.2) by pressing the pressing jaws (13.1, 13.2, 14.1, 14.2) onto respectively one of the openings (2 to 6) on the circumference of the tube section towards one another in such a manner that a shift slope arises from the opening (2 to 6),
- two identical bearing bushes (7.1, 7.2) are respectively attached to the tube piece (1) at the end sides.

2. Method according to Claim 1, **characterised in that** respectively one bearing bush (7.1, 7.2) is introduced at respectively one substantially end-side region of the tube piece (1).

3. Method according to one of Claims 1 or 2, **characterised in that** a locking device (9) is joined to the tube piece (1) by laser welding.

4. Method according to one of the preceding claims, **characterised in that** at least one shift finger (8.1, 8.2) is joined to the tube piece (1) by laser welding.

## Revendications

1. Procédé de fabrication d'un tube commutateur pour boîte de vitesses de véhicule automobile, dans lequel
- un segment de tube d'une seule pièce (1) est pourvu par découpe au laser d'au moins une ouverture (2 à 6),
- dans le segment de tube (1) est découpée au laser au moins une ouverture (2 à 6), l'ouverture (2 à 6) étant un contour de coulisse et/ou un contour de capteur et/ou une fenêtre de passage de fourche de changement de vitesse et/ou une entrée de levier de sélection et/ou un moyen de réception pour un moyen d'encliquetage (9),
**caractérisé par le fait que**
- le segment de tube (1) est engagé sur un mandrin (11),
- le segment de tube (1) est fixé en une position prédéterminée sur le mandrin (11),
- le segment de tube (1) est usiné par deux mâchoires de pressage opposées (13.1, 13.2, 14.1, 14.2) en ce que les mâchoires de pressage (13.1, 13.2, 14.1, 14.2) poussent sur l'une respective des ouvertures (2 à 6) sur le pourtour du segment de tuyau l'une vers l'autre de sorte que de l'ouverture (2 à 6) résulte une face oblique de commutation,
- deux coussinets identiques (7.1, 7.2) sont placés, chacun, à l'extrémité du segment de tuyau (1).

2. Procédé selon la revendication 1, **caractérisé par le fait qu'**à chaque zone substantiellement d'extrémité du segment de tube (1) est placé un coussinet respectif (7.1, 7.2).

3. Procédé selon l'une des revendications 1 ou 2, **caractérisé par le fait qu'**un moyen d'encliquetage (9) est fixé par soudage au laser au segment de tube (1).

4. Procédé selon l'une des revendications précédentes, **caractérisé par le fait qu'**au moins un doigt commutateur (8.1, 8.2) est fixé par soudage au laser au segment de tube (1).
